# FASCICULE DE BREVET EUROPEEN

(11) **EP 0 631 093 B1**
(45) Date de publication et mention de la délivrance du brevet: **30.07.1997**
(21) Numéro de dépôt: 94401211.1
(22) Date de dépôt: 02.06.1994
(51) Int. Cl.: F23R 3/34

(54) **Chambre de combustion comprenant un ensemble séparateur de gaz**
Brennkammer mit Gasabscheider
Combustion chamber with a gas separator

(30) Priorité: 03.06.1993 FR 9306634
(43) Date de publication de la demande: 28.12.1994
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Alary, Jean-Paul Daniel, F-94100 Saint Maur les Fosses (FR); Desaulty, Michel André Albert, F-77240 Vert Saint Denis (FR); Pieussergues, Christophe, F-77370 Nangis (FR); Sandelis, Denis Jean Maurice, F-77370 Nangis (FR); Schroer, Pierre Marie Victor Emile, F-91800 Brunoy (FR)

(56) Documents cités:
- EP-A- 0 488 557
- EP-A- 0 491 478
- EP-A- 0 564 170
- CH-A- 260 957
- GB-A- 2 003 554
- GB-A- 2 010 408

## Description

La conception des nouvelles turbomachines aéronautiques conduit, pour obtenir des taux de poilution réduits. à envisager l'adoption de chambres de combustion annulaires comprenant deux groupes d'injecteurs de carburant, l'un fonctionnant au régime ralenti. l'autre au régime plein gaz.

Cest ainsi qu'est déjà connue la constitution d'une chambre de combustion possédant une structure comprenant deux parois annulaires mutuellement écartées, réunies par un fond et délimitant avec celui-ci une enceinte de combustion; un axe de sensible symétrie desdites parois annulaires; des injecteurs de carburant répartis en deux groupes distincts, les injecteurs de carburant d'un premier groupe étant destinés à l'alimentation en carburant lors d'un premier mode de fonctionnement, tel que le régime de ralenti, et les injecteurs de carburant du deuxième groupe étant destinés à l'alimentation en carburant lors d'un deuxième mode de fonctionnement, tel que le régime de plein gaz ; des passages d'admission de comburant ménagés dans ledit fond ; et, un ensemble séparateur des gaz fixé sur ladite structure et interposé entre les injecteurs de carburant des deux dits groupes.

Cet ensemble est un élément critique dans la conception de la chambre de combustion. car il est soumis à des contraintes longitudinales et tangentielles lors du fonctionnement de la chambre de combustion.

La séquence d'allumage d'une telle chambre de combustion est la suivante :
- dans un premier temps, l'allumage est réalisé dans la zone des injecteurs pilotes (ou de ralenti) ;
- en régime de ralenti. au sol, la combustion est stabilisée dans l'ensemble des injecteurs pilotes. qui sont les seuls à fonctionner ;
- dans un deuxième temps, lors de l'accélération du moteur, pour un fonctionnement correspondant environ à 20% de la poussée de décollage, l'alimentation en carburant des injecteurs de décollage est réalisée : la propagation de la flamme se produit des injecteurs pilotes vers les injecteurs de décollage, l'allumage de ceux-ci devant se produire immédiatement pour que l'ensemble des injecteurs de Carburant fonctionne simuitanément.

Il a cependant été constaté. à différentes reprises, un défaut d'allumage des injecteurs de décollage. Ce défaut est lié au manque de propagation direct de la flamme des injecteurs pilotes vers les injecteurs de décollage, ladite flamme étant obligée de contourner le séparateur des injecteurs.

Le brevet EP-A 0.564.170 cité au titre de l'article 54(3) CBE décrit un ensemble séparateur des gaz comprenant une pluralité de secteur élémentaires de séparateur distincts les uns des autres, adjacents l'un du suivant disposés annulairement, chacun étant fixé sur la structure indépendamment des autres secteurs élémentaires de séparateur.
- chaque secteur de séparateur est conformé en un corps allongé présentant deux extrémités transversales, chacune d'elles étant disposée en regard et séparée d'une extrémité transversale d'un secteur de séparateur adjacent par un espace déterminé ;

La présente invention propose une technologie de séparateur capable de réduire fortement les contraintes mécaniques tangentielles précitées. Pour ce faire les avantageuses dispositions suivantes sont en outre adoptées :
- l'un au moins de deux secteurs de séparateur adjacents est creux et susceptible de contenir un gaz sous pression, cependant que l'une au moins des extrémités transversales dudit secteur de séparateur est munie d'une perforation de trous permettant l'échappement dudit gaz sous pression hors de ce secteur de séparateur, à l'intérieur dudit espace déterminé, y créant un écran de gaz sous pression ;
- les extrémités transversales des divers secteurs de séparateur ont des formes identiques, les extrémités transversales de chaque secteur de séparateur constituant une première et une deuxième extrémité transversale disposées en regard d'une deuxième et d'une première extrémité transversale des secteurs de séparateur adjacents audit secteur de séparateur et étant munie d'une première et d'une deuxième perforation de trous, respectivement, les axes des trous d'une deuxième perforation d'une deuxième extrémité transversale étant décalés par rapport aux axes des trous d'une première perforation d'une première extrémité transversale adjacente et réciproquement, de manière que les axes des trous d'une perforation d'une extrémité transversale interfèrent avec l'extrémité transversale disposée en regard et que le gaz sous pression traversant lesdits trous coopère à la réfrigération de l'extrémité transversale avec laquelle interfèrent les axes desdits trous :
- les axes des trous d'une deuxième perforation d'une deuxième extrémité transversale sont disposés en quinconce par rapport à ceux de la première perforation de la première extrémité disposée en regard appartenant à un secteur de séparateur adjacent :
- la perforation de trous d'une extrémité transversale d'un secteur de séparateur est conformée de manière que le gaz sous pression traversant lesdits trous contribue au refroidissement de ladite extrémité transversale ;
- les extrémités transversales d'un secteur de séparateur s'étendent dans l'enceinte de combustion à partir du fond de la chambre de combustion, en ayant leurs extrémités les plus éloignées dudit fond qui divergent l'une de l'autre et dans un plan axial ;
- chaque secteur de séparateur est constitué par un corps creux comportant une plaque axiale externe et une plaque axiale interne et contenant un gaz comburant sous pression. cependant que l'une au moins desdites plaques axiales externe et interne est traversée par une pluralité de trous d'apport complémentaire de comburant.

L'avantage principal d'une chambre de combustion conforme à l'invention réside dans une diminution importante des contraintes longitudinales et tangentielles auxquelles étaient soumis les séparateurs connus antérieurement. Bien entendu, la nouvelle conception devait être viable et notamment limiter toute recirculation indésirable des gaz chauds entre les injecteurs des deux groupes et prévoir la bonne tenue aux contraintes thermiques des secteurs de séparateur, donc leur réfrigération, en particulier celle des extrémités des secteurs de séparateur. Les dispositions retenues conformément à l'invention permettent l'obtention des fonctionnements satisfaisants recherchés, et permettent aussi de faciliter la propagation de la flamme entre les deux injecteurs des deux groupes.

L'invention sera mieux comprise, et des caractéristiques secondaires de leurs avantages apparaîtront au cours de la description de réalisations donnée ci-dessous à titre d'exemple.

Il sera fait référence aux dessins annexés, dans lesquels :
- la figure 1 est une demi-coupe axiale d'une chambre de combustion conforme à l'invention;
- la figure 2 est une vue suivant la coupe II-II de la figure 1 ;
- les figures 3 et 4 sont deux vues perspectives de droite et de gauche d'un secteur de séparateur conforme à l'invention, suivant les flèches F3 et F4 de la figure 2, respectivement ;
- la figure 5 est une vue en perspective, éclatée avant assemblage, suivant la flèche F5 de la figure 1, d'un secteur de séparateur conforme à l'invention ;
- la figure 6 est une coupe suivant VI-VI de la figure 2 ;
- la figure 7 est une vue agrandie du détail A de la figure 2 ; et
- la figure 8 est une vue perspective suivant flèche F8 de la figure 1, d'une variante de réalisation conforme à l'invention.

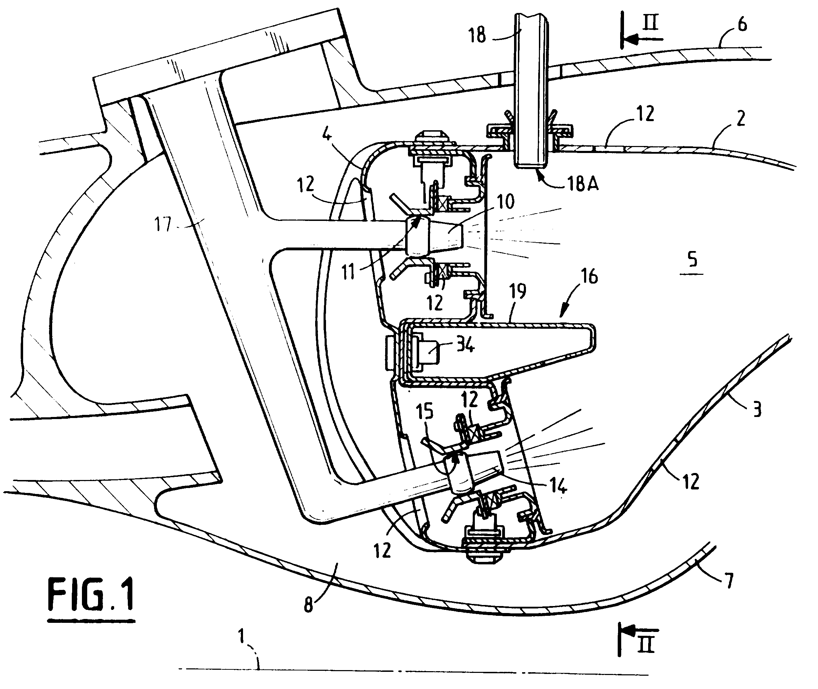

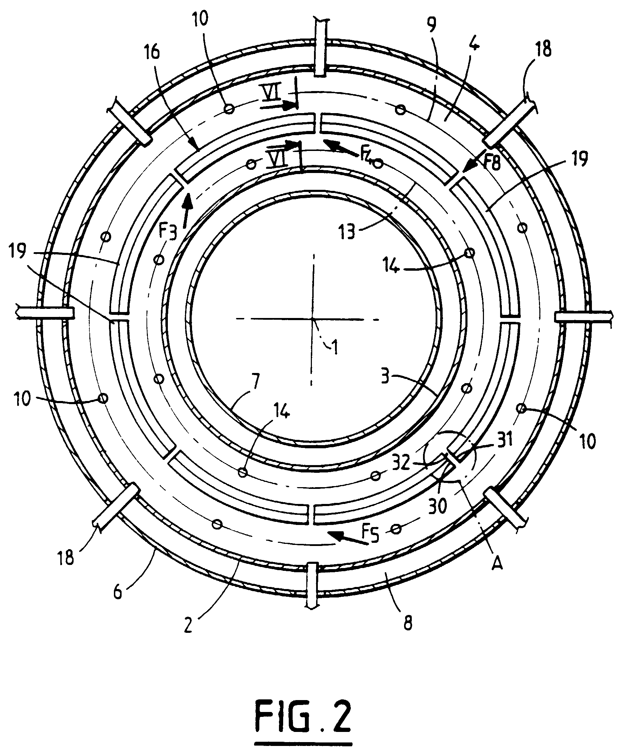

La chambre de combustion de turbine à gaz représentée sur les figures 1 et 2 comprend :
- un axe 1 de sensible symétrie axiale ;
- une paroi annulaire externe 2, symétrique de révolution d'axe 1 ;
- une paroi annulaire interne 3, symétrique de révolution d'axe 1 ;
- un fond 4, transversal par rapport à l'axe 1, réunissant les parois externe 2 et interne 3, et délimitant avec celles-ci une enceinte de combustion 5 ;
- des deuxièmes parois annulaires externe 6 et interne 7 d'axe 1, définissant une enceinte 8, alimentée en air sous pression provenant d'un compresseur d'air et contenant ladite enceinte de combustion 5 ;
- une première couronne circulaire 9, d'axe 1, sur laquelle sont centrés des injecteurs de carburant 10 d'un premier groupe d'injecteurs de carburant, chacun d'eux traversant un trou 11 ménagé dans le fond 4 et coopérant pour la carburation du carburant avec des passages d'air, plus généralement de comburant 12 qui traversent le fond 4 et les parois 2 et 3 ; ces injecteurs de carburant, les plus proches de la paroi externe 2, étant destinés à fonctionner, en étant seuls en service, au régime du ralenti, et constituant des injecteurs de carburant pilotes ;
- une deuxième couronne circulaire 13, d'axe 1, de diamètre inférieur à celui de la première couronne 9, sur laquelle sont centrés des injecteurs de carburant 14 d'un deuxième groupe d'injecteurs de carburant, chacun d'eux traversant un trou 15 ménagé dans le fond 4, ces injecteurs de carburant étant destinés à fonctionner au régime de pleins gaz, ou de décollage d'un avion équipé de ladite turbine à gaz, les injecteurs de carburant 10 et 14 étant branchés sur un conduit général 17 de carburant ;
- un ensemble 16 séparateur de gaz, de forme générale annulaire d'axe 1, fixé sur le fond 4, interposé entre les injecteurs de carburant 10 et 14 des deux groupes, constituant une saillie à l'intérieur de l'enceinte de combustion 5 par rapport au fond 4 ;
- des bougies d'allumage 18, qui sont portées par la paroi externe 2 et dont la tête 18a est disposée à l'intérieur de l'enceinte de combustion 5.

Comme cela ressort de la figure 2, l'ensemble 16 séparateur de gaz est constitué par une pluralité de secteurs élémentaires 19 de séparateur, chacun ayant une forme allongée, étant distinct des autres secteurs élémentaires 19 et étant fixé sur le fond par des moyens de fixation distincts de ceux des autres secteurs élémentaires 19.

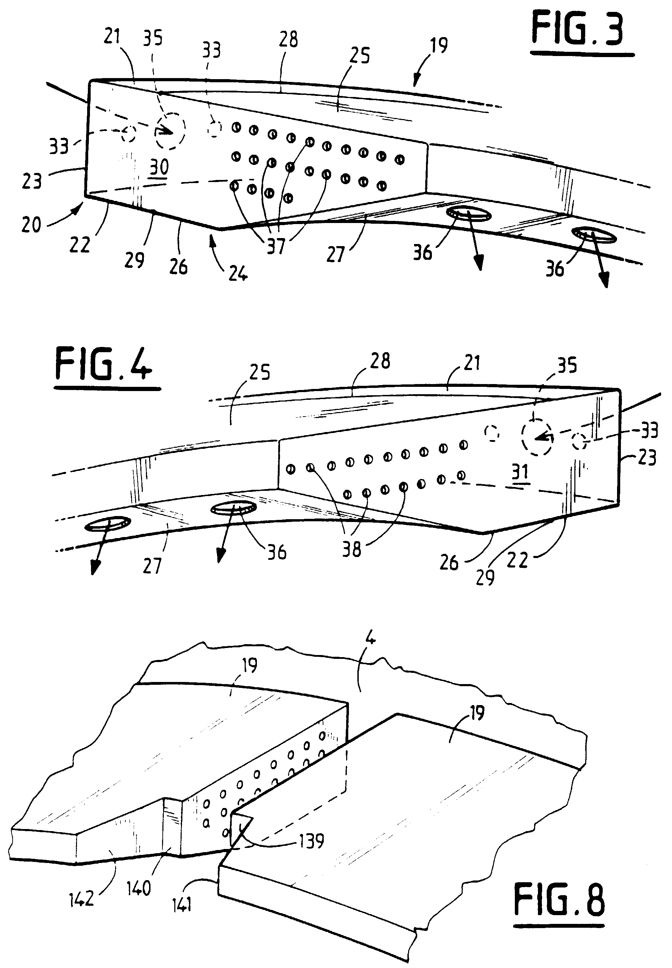

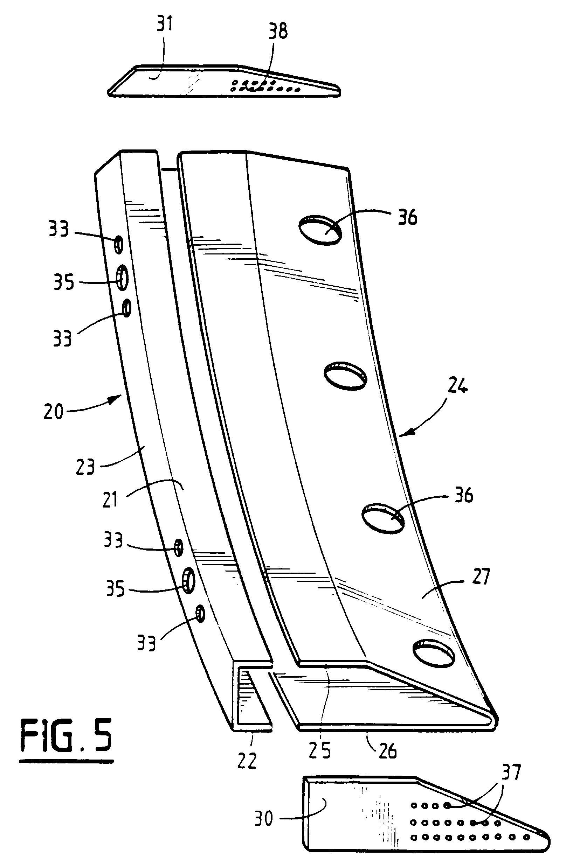

Les figures 3 à 5 représentent un secteur élémentaire 19 de séparateur, qui comporte :
- un premier profilé 20, ayant une section transversale en U, présentant une aile externe 21 et une aile interne 22 réunies par une plaque de liaison 23 ;
- un deuxième profilé 24, ayant une section transversale à deux ailes externe 25 et interne 26 reliées par une plaque interne 27 formant un dièdre aigu, en V avec la plaque externe 25 ;
- un premier cordon de soudure 28 des lisières d'extrémité des ailes externes 21 et 25 des deux profilés, ces ailes externes étant disposées sensiblement dans le prolongement l'une de l'autre ;
- un deuxième cordon de soudure 29 des lisières d'extrémité des ailes internes 22 et 26 des deux profilés, lesdites ailes internes étant disposées sensiblement dans le prolongement l'une de l'autre ; et
- deux plaques planes 30, 31 de mêmes formes et dimensions constituant les extrémités transversales du secteur élémentaire 19, chacune d'elles étant soudée à sa périphérie aux extrémités transversales des profilés 20 et 24, après assemblage de ceux-ci par l'intermédiaire des soudures 28, 29.

Après assemblage des deux profilés 20 et 24, le secteur élémentaire 19 constitue un élément creux, fermé. Les divers secteurs élémentaires sont disposés les uns à la suite des autres, pour former l'ensemble annulaire 16, la plaque d'extrémité 30 d'un secteur élémentaire 19 étant disposée en regard de, et adjacente à, la plaque d'extrémité 31 d'un secteur élémentaire adjacent 19, et ainsi de suite, un espace 32 avant ménagé entre lesdites plaques d'extrémité 30 et 31.

Deux séries de deux trous 33 traversent la plaque de liaison 23 de chaque secteur élémentaire, et permettent le passage de boulons de fixation 34 sur le fond 4 de la chambre de combustion. Entre les trous 33 de chaque paire de trous, un trou 35 est ménagé, et met en communication l'enceinte 8 alimentée en air sous pression avec l'intérieur du secteur élémentaire creux 19.

Les ailes internes 22, 26 et la plaque 27 sont orientées vers les injecteurs de carburant 14, dits, de plein gaz, ou de décollage. Des trous 36, ici au nombre de quatre, traversent la plaque 27 et réalisent la communication de l'intérieur d'un secteur élémentaire 19 avec la partie de l'enceinte de combustion 5 dans laquelle débouchent les injecteurs de carburant de plein gaz 14. L'air sous pression, qui pénètre à l'intérieur dudit secteur élémentaire 19 à travers les trous 35, est de ce fait susceptible de s'échapper hors de ce secteur élémentaire à travers les trous 36, réalisant une admission complémentaire de comburant à proximité des injecteurs de carburant de plein gaz 14, dans la zone d'admission d'air primaire associée à ces injecteurs de carburant.

Par ailleurs, chaque plaque d'extrémité 30 présente, localisée principalement dans la zone du dièdre en V, comprise entre la ou les ailes externes 21, 25 et la plaque interne de liaison 27, une perforation de trous 37 disposés suivant un quadrillage rectangulaire de trous.

De manière analogue, chaque plaque d'extrémité 31 présente, avec la même localisation, une perforation de trous 38, eux aussi disposés suivant un quadrillage rectangulaire de trous.

Les axes des trous 37, comme ceux des trous 38, sont inclinés par rapport aux perpendiculaires respectives aux plaques d'extrémité dans lesquelles ils sont ménagés.

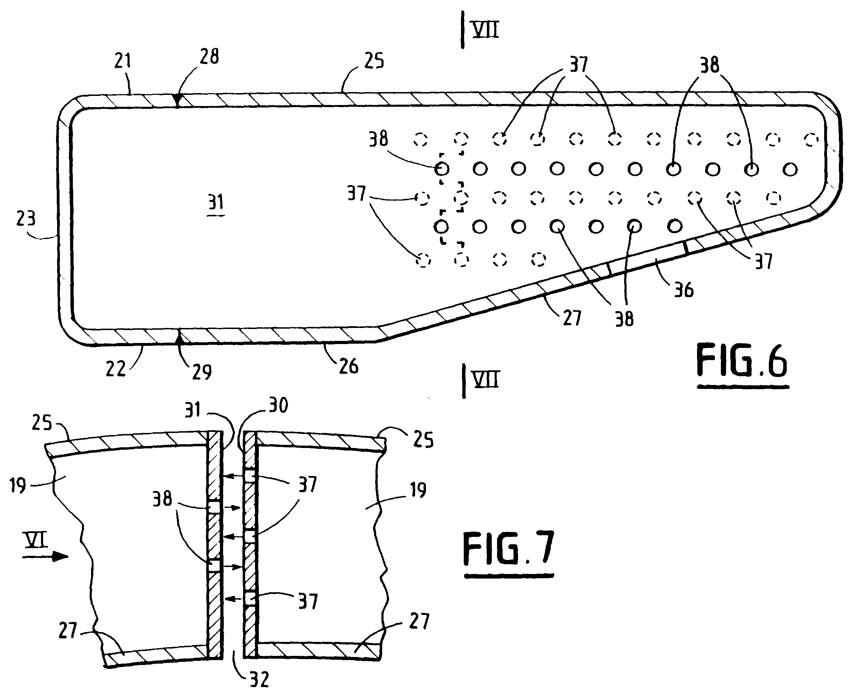

Par ailleurs, les axes des trous 37 d'une plaque d'extrémité 30 intersectent la plaque d'extrémité 31 appartenant à un secteur élémentaire 19 adjacent, disposée en regard, entre les trous 38 traversant ladite plaque d'extrémité 31, et étant disposés en quinconce par rapport aux trous 38, et, réciproquement, les axes des trous 38 de la plaque d'extrémité 31 intersectent la plaque d'extrémité 30 du secteur élémentaire 19 adjacent, entre les trous 37 traversant cette plaque d'extrémité 30. La disposition correspondante est représentée sur les figures 6 et 7.

Les trous 37 et 38 ont une première fonction : celle de réfrigérer les plaques d'extrémité 30 et 31 par léchage tangentiel de ces plaques d'extrémité par l'air au moment où celui-ci s'échappe hors de l'intérieur de chaque secteur élémentaire 19. A cet effet, les axes des trous 37 sont inclinés par rapport à la perpendiculaire à ladite plaque d'extrémité.

Les trous 37 et 38 assurent une deuxième fonction : l'air qui s'en échappe, du fait de la disposition intercalée des quadrillages de ces trous et des positions respectives de leurs axes, percute en une multitude de jets d'air sous pression la tôle de la plaque d'extrémité 31, 30 disposée en regard, ce qui assure une réfrigération complémentaire de ladite plaque d'extrémité 31, 30.

Enfin les trous 37, 38 ont une troisième fonction, également importante dans la disposition représentée : le risque existerait en l'absence, desdits trous, d'une recirculation éventuelle des gaz chauds entre les deux zones disposées de part et d'autre de l'ensemble séparateur 16, à travers les divers espaces 32. L'air, qui s'échappe des trous 37, 38, crée dans chaque espace 32 un écran de gaz sous pression qui interdit une telle recirculation des gaz chauds.

En variante, les plaques transversales d'extrémité des secteurs élémentaires 19, au lieu d'être entièrement parallèles deux à deux, l'une 30 d'un secteur élémentaire. l'autre 31, disposée en regard, du secteur élémentaire adjacent, peuvent comporter, dans la zone du dièdre en V formé par les plaques externes 21, 25 et la plaque interne de liaison 27, un décrochement tangentiel 139, 140 complété par une partie effilée 141, 142 les parties effilées 141, 142 divergeant vers un plan axial dudit secteur élémentaire. La figure 8 illustre cette disposition, qui participe à la bonne propagation de la flamme d'une tête vers l'autre.

A noter que les plaques transversales d'extrémité 30, 31 s'étendent sensiblement perpendiculairement au fond 4, et en fait sensiblement dans des plans radiaux contenant l'axe 1.

Les avantages des dispositions représentées sont les suivants :
- Bonne tenue aux contraintes tangentielles et longitudinales du séparateur grâce à la sectorisation 19 ;
- Excellent refroidissement des extrémités de secteurs grâce à la disposition particulière du maillage des perforations 37, 38 ;
- Aucune recirculation de gaz chaud entre les deux zones d'injection de carburant 10, 14, grâce aux écrans d'air frais sous pression formés entre chaque secteur dans les parties perforées 37, 38 des secteurs de séparateur ;
- Facilité d'allumage du carburant des injecteurs de carburant plein gaz, ou de décollage d'une chambre à deux groupes d'injecteurs de carburant.
- Amélioration des capacités d'accélération du moteur au plein gaz (temps d'accélération réduit).

## Revendications

1. Chambre de combustion possédant une structure comprenant deux parois annulaires (2,3) mutuellement écartées, réunies par un fond (4) et délimitant avec celui-ci une enceinte de combustion (5) ; un axe (1) de sensible symétrie desdites parois annulaires ; des injecteurs de carburant (10, 14) répartis en deux groupes distincts, les injecteurs de carburant (10) d'un premier groupe étant destinés à l'alimentation en carburant lors d'un premier mode de fonctionnement, tel que le régime de ralenti, et les injecteurs de carburant (14) du deuxième groupe étant destinés à l'alimentation en carburant lors d'un deuxième mode de fonctionnement, tel que le régime de plein gaz ; des passages (12) d'admission de comburant ménagés dans ledit fond (4) ; et, un ensemble (16) séparateur des gaz, comprenant une pluralité de secteurs élémentaires de séparateur (19) distincts les uns des autres, adjacents l'un du suivant disposés annulairement, chacun étant fixé (34) sur le fond (4) indépendamment des autres secteurs élémentaires de séparateur, et fixé sur ladite structure et interposé entre les injecteurs de carburant (10, 14) des deux dits groupes, chaque secteur de séparateur (19) étant conformé en un corps allongé présentant deux extrémités transversales (30, 31), chacune d'elles étant disposée en regard et séparée d'une extrémité transversale d'un secteur de séparateur (19) adjacent par un espace déterminé (32) caractérisée en ce que l'un au moins des deux secteurs de séparateur (19) adjacents est creux et susceptible de contenir un gaz sous pression, cependant que l'une (30,31) au moins des extrémités transversales dudit secteur de séparateur est munie d'une perforation de trous (37,38) permettant l'échappement dudit gaz sous pression hors de ce secteur de séparateur, à l'intérieur dudit espace déterminé (32), y créant un écran de gaz sous pression.

2. Chambre de combustion selon la revendication 1, caractérisée en ce que les extrémités transversales (30,31) des divers secteurs de séparateur ont des formes identiques, les extrémités transversales de chaque secteur de séparateur constituant une première (30) et une deuxième (31) extrémité transversale disposées en regard d'une deuxième (31) et d'une première (30) extrémité transversale des secteurs de séparateur adjacents audit secteur de séparateur et étant munie d'une première (37) et d'une deuxième (38) perforation de trous, respectivement, les axes des trous d'une deuxième perforation (38) d'une deuxième extrémité transversale (31) étant décalés par rapport aux axes des trous d'une première perforation (37) d'une première extrémité transversale (30) adjacente et réciproquement, de manière que les axes des trous d'une perforation d'une extrémité transversale interfèrent avec l'extrémité transversale disposée en regard et que le gaz sous pression traversant lesdits trous coopère à la réfrigération de l'extrémité transversale avec laquelle interfèrent les axes desdits trous.

3. Chambre de combustion selon la revendication 2, caractérisée en ce que les axes des trous (38) d'une deuxième perforation d'une deuxième extrémité transversale (31) sont disposés en quinconce par rapport à ceux de la première perforation (37) de la première extrémité (30) disposée en regard appartenant à un secteur de séparateur adjacent.

4. Chambre de combustion selon l'une quelconque des revendications 1 à 3, caractérisée en ce que la perforation (37,38) de trous d'une extrémité transversale (30,31) d'un secteur de séparateur (19) est conformée de manière que le gaz sous pression traversant lesdits trous coopère à la réfrigération de ladite extrémité transversale (30,31).

5. Chambre de combustion selon l'une quelconque des revendications 1 à 4, caractérisée en ce que les extrémités transversales d'un secteur de séparateur (19) s'étendent dans l'enceinte de combustion à partir du fond (4) de la chambre de combustion, en ayant leurs extrémités (141,142) les plus éloignées dudit fond qui divergent l'une de l'autre, dans un plan axial.

## Patentansprüche

1. Brennkammer mit einem Aufbau aus zwei ringförmigen Wänden (2, 3), die voneinander beabstandet sind, durch eine Rückwand (4) miteinander verbunden sind und mit dieser einen Verbrennungsraum (5) bilden; mit einer gemeinsamen Symmetrieachse der genannten ringförmigen Wände; mit Brennstoffeinspritzdüsen (10, 14), die in zwei unterschiedliche Gruppen aufgeteilt sind, wobei die Brennstoffeinspritzdüsen (10) einer ersten Gruppe für die Brennstoffzufuhr in einer ersten Betriebsart wie z. B. Leerlauf vorgesehen sind und die Brennstoffeinspritzdüsen (14) der zweiten Gruppe für die Brennstoffzufuhr in einer zweiten Betriebsart wie z. B. Vollgas vorgesehen sind; mit Durchlässen (12) für die Zufuhr von Brennstoff, die in der genannten Rückwand (4) ausgeführt sind; und mit einem Gasabscheider (16), der aus mehreren voneinander getrennten Abscheider-Grundsegmenten (19) besteht, die einer an den nächsten angrenzen und ringförmig angeordnet sind, wobei jeder getrennt von den anderen Gasabscheider-Grundsegmenten an der Rückwand (4) befestigt ist (34), und der an dem genannten Aufbau befestigt ist und zwischen den Brennstoffeinspritzdüsen (10, 14) der beiden genannten Gruppen angeordnet ist, wobei jeder Abscheidersektor (19) als länglicher Körper mit zwei quer verlaufenden Endseiten (30, 31) ausgeführt ist, die jeweils gegenüber und getrennt von einer quer verlaufenden Endseite eines mit einem bestimmten Zwischenraum (32) angrenzenden Abscheidersektors (19) angeordnet sind, wobei die Brennkammer dadurch gekennzeichnet ist, daß mindestens einer von zwei angrenzenden Abscheidersektoren hohl ist und ein unter Druck stehendes Gas enthalten kann, während mindestens eine (30, 31) der quer verlaufenden Endseiten des genannten Abscheidersektors mit einer Perforierung aus Löchern (37, 38) versehen ist, durch die das genannte unter Druck stehende Gas aus diesem Abscheidersektor ins Innere des genannten bestimmten Zwischenraums (32) entweichen kann, wodurch dort ein Druckgasschirm entsteht.

2. Brennkammer nach Anspruch 1,
dadurch gekennzeichnet, daß die quer verlaufenden Endseiten (30, 31) der verschiedenen Abscheidersektoren gleich geformt sind, wobei die quer verlaufenden Endseiten jedes Abscheidersektors eine erste (30) und eine zweite (31) quer verlaufende Endseite bilden, die gegenüber einer zweiten (31) bzw. einer ersten (30) quer verlaufenden Endseite der an den genannten Abscheidersektor angrenzenden Abscheidersektoren angeordnet sind und mit einer ersten (37) bzw. einer zweiten (38) Lochperforierung versehen sind, wobei die Achsen der Löcher einer zweiten Perforierung (38) einer zweiten quer verlaufenden Endseite (31) gegenüber den Achsen der Löcher einer ersten Perforierung (37) einer angrenzenden ersten quer verlaufenden Endseite (30) verschoben sind und umgekehrt, so daß die Achsen der Löcher einer Perforierung einer quer verlaufenden Endseite mit der gegenüberliegend angeordneten quer verlaufenden Endseite interferieren und daß das durch die genannten Löcher strömende unter Druck stehende Gas zur Kühlung der quer verlaufenden Endseite beiträgt, mit der die Achsen der genannten Löcher interferieren.

3. Brennkammer nach Anspruch 2,
einer zweiten quer verlaufenden Endseite (31) im Zickzack gegenüber denen der ersten Perforierung (37) der gegenüberliegend angeordneten ersten Endseite (30) eines angrenzenden Abscheidersektors angeordnet sind.

4. Brennkammer nach einem der Ansprüche 1 bis 3,
dadurch gekennzeichnet, daß die Lochperforierung (37, 38) einer quer verlaufenden Endseite (30, 31) eines Abscheidersektors (19) so geformt ist, daß das durch die genannten Löcher strömende unter Druck stehende Gas zur Kühlung der genannten quer verlaufenden Endseite (30, 31) beiträgt.

5. Brennkammer nach einem der Ansprüche 1 bis 4,
dadurch gekennzeichnet, daß die quer verlaufenden Endseiten eines Abscheidersektors (19) sich von der Rückwand (4) der Brennkammer in den Brennraum erstrecken, wobei ihre Enden (141, 142), die am weitesten von der genannten Rückwand entfernt sind in einer axialen Ebene auseinanderlaufen.

## Claims

1. Combustion chamber assembly having a structure comprising two annular walls (2, 3) spaced apart, joined together by an end (4) and delimiting therewith a combustion chamber (5); an axis (1) of almost symmetry of the said annular walls; fuel injectors (10, 14) split into two distinct groups, the fuel injectors (10) of a first group being intended to supply fuel during a first operating mode, such as idling speed, and the fuel injectors (14) of the second group being intended to supply fuel during a second operating mode, such as wide-open throttle; passages (12) for letting in oxidizing agent formed in the said end (4); and, a gas separator assembly (16) comprising a plurality of elemental separator sectors (19) distinct from one another, one adjacent to the next, arranged annularly, each being fixed (34) to the end (4) independently of the other elemental separator sectors and fixed to the said structure and interposed between the fuel injectors (10, 14) of the two said groups, each separator sector (19) being shaped into an elongate body having two transverse ends (30, 31), each of them arranged facing and separated from a transverse end of an adjacent separator sector (19) by a defined space (32), characterized in that at least one of the two adjacent separator sectors (19) is hollow and capable of containing a gas under pressure, while at least one (30, 31) of the transverse ends of the said separator sector is perforated with holes (37, 38) allowing the said gas under pressure to escape from this separator sector into the said defined space (32), therein creating a screen of gas under pressure.

2. Combustion chamber assembly according to Claim 1, characterized in that the transverse ends (30, 31) of the various separator sectors have identical shapes, the transverse ends of each separator sector constituting a first transverse end (30) and a second transverse end (31) which are arranged facing a second transverse end (31) and a first transverse end (30) of the separator sectors adjacent to the said separator sector and being perforated with a first set (37) and with a second set (38), respectively, of holes, the axes of the holes of the second set (38) of a second transverse end (31) being offset with respect to the axes of the holes of a first set (37) of an adjacent first transverse end (30) and vice versa so that the axes of the holes of one set of perforations in one transverse end interfere with the transverse end arranged facing it and so that the gas under pressure passing through the said holes plays a part in cooling the transverse end with which the axes of the said holes interfere.

3. Combustion chamber assembly according to Claim 2, characterized in that the axes of the holes (38) of a second set of perforations of a second transverse end (31) are arranged in a staggered configuration with respect to those of the first set of perforations (37) of the first end (30) arranged facing it and belonging to an adjacent separator sector.

4. Combustion chamber assembly according to any one of Claims 1 to 3, characterized in that the perforated set of holes (37, 38) in one transverse end (30, 31) of one separator sector (19) are configured in such a way that the gas under pressure passing through the said holes plays a part in cooling the said transverse end (30, 31).

5. Combustion chamber assembly according to any one of Claims 1 to 4, characterized in that the transverse ends of one separator sector (19) extend into the combustion chamber from the end (4) of the combustion chamber assembly, having their ends (141, 142) furthest from the said end diverging from one another in an axial plane.
